# FASCICULE DE BREVET EUROPEEN

(11) **EP 2 383 853 B1**
(45) Date de publication et mention de la délivrance du brevet: **30.08.2017**
(21) Numéro de dépôt: 11161842.7
(22) Date de dépôt: 11.04.2011
(51) Int. Cl.: H02G 13/00

(54) **Ensemble constitué d'une enveloppe de protection et d'un paratonnerre à dispositif d'amorçage**
Baugruppe aus einer Schutzhülle und einem Blitzableiter mit Zündvorrichtung
Assembly cinsisting of a protective housing and a lightning conductor with priming device

(30) Priorité: 30.04.2010 FR 1053388
(43) Date de publication de la demande: 02.11.2011
(73) Titulaire: ABB Schweiz AG, 5400 Baden (CH)
(72) Inventeur: Claverie, Malvina, 65300 Lannemezan (FR); Roland, Bruno, 94100 Saint-Maur-des-Fosses (FR); Serrie, Gérard, 65350 Lansac (FR)
(74) Mandataire: Hirsch & Associés

(56) Documents cités:
- EP-A2- 0 905 927
- WO-A1-98/00898
- WO-A2-2011/067481
- FR-A- 837 341
- FR-A1- 2 689 699
- FR-A1- 2 799 585

## Description

L'invention se rapporte au domaine technique général de la protection contre les effets directs de la foudre et plus particulièrement au domaine des paratonnerres à dispositif d'amorçage (PDA).

Le principe des PDAs est d'appliquer des impulsions de tension entre la pointe du paratonnerre et la terre de façon à créer un espace ionisé autour de la pointe. Cet espace ionisé favorise une avance à l'amorçage d'un traceur ascendant à partir de la pointe du paratonnerre pour augmenter la probabilité que la foudre frappe le PDA. Le traceur ascendant, en rejoignant un traceur descendant provenant des nuages orageux, assure ainsi que le courant de foudre soit écoulé à la terre en passant par le PDA.

La structure d'un PDA comprend classiquement :
- une partie active sur laquelle est montée la pointe et qui est reliée au dispositif d'amorçage pour appliquer les impulsions de tension à la partie active,
- un conducteur de descente destiné à être relié à la terre, et
- une partie diélectrique par le biais de laquelle la partie active est montée sur le conducteur de descente, la partie active étant séparée du conducteur de descente par une lame d'air pour former entre eux un éclateur à air par le biais duquel le courant de foudre passe de la partie active au conducteur de descente.

Une fois monté sur le site à protéger, les PDAs sont évidemment placés dans l'environnement extérieur. De ce fait, les caractéristiques diélectriques de l'éclateur à air formé entre la partie active et le conducteur de descente sont susceptibles d'être dégradées par les conditions environnementales.

Ce problème concerne tout particulièrement l'eau de pluie qui peut se déposer sur la partie diélectrique du PDA ou encore être en suspension sous forme de gouttelettes dans l'air de l'éclateur à air du PDA. De ce fait, le niveau d'isolation électrique entre la partie active et le conducteur de descente du PDA est diminué en raison de la conductivité de l'eau de pluie, ce qui a pour effet de dégrader les performances du PDA. Dans le cas limite, la partie active et le conducteur de descente sont court-circuités, ce qui empêche l'application des impulsions de tension sur la partie active du PDA. De ce fait, le PDA ne fonctionne plus que comme une simple pointe de Franklin.

Ce problème existe également concernant la pollution atmosphérique, notamment si le PDA est monté à proximité de cheminées d'usine, les cheminées d'usines étant fréquemment utilisées en tant que point haut des bâtiments pour la disposition de paratonnerres. Les particules de pollution peuvent rester en suspension dans l'air atmosphérique et donc dans la lame d'air de l'éclateur à air du PDA, mais surtout elles peuvent se déposer sur la partie diélectrique du PDA. Or ces particules de pollutions peuvent aussi présenter une certaine conductivité électrique venant détériorer le niveau d'isolation de l'éclateur à air du PDA. Enfin, il peut aussi arriver que des insectes viennent se nicher dans l'espace entre la partie active et le conducteur de descente du PDA qui forme l'éclateur à air.

Une amélioration a été proposée par FR-A-2 799585 (demande de brevet français déposée avant et publiée après la date de priorité de la présente demande) dans lequel la partie active du PDA comprend une cloche métallique ouverte vers le bas. A l'intérieur de la cloche est placé l'éclateur à air lequel est formé entre celle-ci et un socle relié au conducteur de descente. De même, le socle est isolé de la cloche par un isolant lequel est lui aussi placé à l'intérieur de la cloche. De ce fait, l'éclateur à air et l'isolant sont protégés dans une certaine mesure de l'environnement. FR-A-2 799 585 divulgue un paratonnerre dans lequel l'enveloppe fait partie intégrante du paratonnerre et forme même une partie de l'éclateur.

Néanmoins, cette protection n'est pas satisfaisante car les gouttelettes d'eau peuvent atteindre l'éclateur à air et l'isolant malgré la cloche, notamment dans le cas d'orages avec des vents tournoyants. La cloche n'empêche pas non plus la pénétration et le dépôt de particules notamment en cas de pollution importante de l'air, ou encore la pénétration d'insectes.

Dans WO2011/067481, représentant état de la technique selon l'article 54(3) CBE, est divulgué un paratonnerre à fonctionnement régulé dans lequel l'enveloppe fait partie intégrante du paratonnerre et forme même une partie de l'éclateur.

Par conséquent, le but de la présente invention est de proposer une solution permettant d'améliorer la fiabilité des PDAs vis-à-vis des risques de dégradation des caractéristiques diélectriques de leur éclateur à air par l'environnement.

Pour cela l'invention propose un ensemble comprenant :
- un paratonnerre à dispositif d'amorçage, comprenant :
   une partie active reliée au dispositif d'amorçage pour favoriser l'amorçage d'un traceur ascendant à partir de la partie active,
   un conducteur de descente destiné à être relié à la terre, et
   une partie diélectrique par le biais de laquelle la partie active est montée sur le conducteur de descente, la partie active étant séparée du conducteur de descente par une lame d'air pour former entre eux un éclateur à air par le biais duquel le courant de foudre passe de la partie active au conducteur de descente,
- une enveloppe diélectrique fixée sur le paratonnerre pour protéger l'éclateur à air contre la dégradation de ses caractéristiques diélectriques par l'environnement, une portion supérieure de l'enveloppe étant fixée sur la partie active,
   laquelle enveloppe est prévue pour être fixée sur le paratonnerre pour protéger l'éclateur à air contre la dégradation de ses caractéristiques diélectriques par l'environnement tout en laissant la partie active du paratonnerre exposée à l'environnement.

Selon une variante, l'enveloppe est prévue pour être fixée de manière étanche sur le pourtour inférieur de la partie active du paratonnerre.

Selon une variante, l'enveloppe est prévue pour être fixée de manière étanche sur un pourtour du conducteur de descente.

Selon une variante, l'enveloppe présente un caractère élastique pour assurer son maintien sur le paratonnerre par serrage élastique de l'enveloppe sur la partie active du paratonnerre et éventuellement sur le conducteur de descente du paratonnerre.

Selon une variante, l'enveloppe comprend une saillie annulaire sur la face interne de l'enveloppe prévue pour être disposée sur la partie active du paratonnerre, ladite saillie annulaire étant prévue pour être logée dans une gorge correspondante de la partie active du paratonnerre pour fixer l'enveloppe sur le paratonnerre.

Selon une variante, l'enveloppe est réalisée en EPDM et/ou en silicone.

Selon une variante, l'enveloppe comprend au moins une rainure ménagée dans la face interne de la partie de l'enveloppe prévue pour être mise en contact contre le conducteur de descente du paratonnerre pour permettre l'écoulement hors de l'enveloppe de l'eau de condensation se formant dans l'éclateur à air.

Selon une variante, l'enveloppe est dimensionnée pour que la distance d'isolation à travers l'air entre la partie active et le conducteur de descente du paratonnerre du côté extérieur de l'enveloppe soit supérieure ou égale au double de la distance d'isolation de l'éclateur à air.

Selon une variante, l'enveloppe est formée en une seule et même pièce, l'enveloppe étant conçue pour permettre l'évacuation dans l'environnement d'air dilaté provenant de l'éclateur à air sur amorçage de celui-ci par le courant de foudre.

Selon une variante, l'enveloppe est prévue pour assurer l'évacuation de l'air dilaté par passage entre l'enveloppe et le conducteur de descente.

Selon une variante, l'enveloppe présente un caractère élastique assurant la déformation élastique de l'enveloppe sous l'effet de la dilation de l'air de l'éclateur sur amorçage de celui-ci par le courant de foudre pour autoriser ou favoriser le passage de l'air dilaté entre l'enveloppe et le conducteur de descente.

Selon une variante, l'enveloppe est réalisée en deux pièces distinctes prévues pour être fixées la première sur la partie active du paratonnerre et la deuxième sur le conducteur de descente du paratonnerre tout en se rejoignant pour former ensemble l'enveloppe, les deux pièces étant prévues pour être disjointes par la dilation de l'air de l'éclateur sur amorçage de celui-ci par le courant de foudre.

Selon une variante, la deuxième pièce est adaptée pour changer de position sous l'effet de la dilation de l'air de l'éclateur sur amorçage de celui-ci par un courant de foudre afin de visualiser l'occurrence du coup de foudre sur le paratonnerre, autrement dit, la deuxième pièce est adaptée pour visualiser l'occurrence d'un coup de foudre sur le paratonnerre par changement de position sous l'effet de la dilation de l'air de l'éclateur sur amorçage de celui-ci par le courant de foudre.

Selon une variante, la deuxième pièce est adaptée pour se retourner sur le conducteur de descente sous l'effet de la dilation de l'air de l'éclateur sur amorçage de celui-ci par un courant de foudre afin de visualiser l'occurrence du coup de foudre sur le paratonnerre, autrement dit, la deuxième pièce est adaptée pour visualiser l'occurrence d'un coup de foudre sur le paratonnerre par retournement sur le conducteur de descente sous l'effet de la dilation de l'air de l'éclateur sur amorçage de celui-ci par le courant de foudre.

Selon une variante, la première pièce est prévue pour former une cloche à l'intérieur de laquelle est disposée la partie diélectrique et l'éclateur à air lorsque la première pièce est fixée sur la partie active du paratonnerre.

Dans lequel l'enveloppe est fixée sur le paratonnerre pour protéger l'éclateur à air contre la dégradation de ses caractéristiques diélectriques par l'environnement, la partie active du paratonnerre étant exposée à l'environnement.

L'invention concerne donc une enveloppe diélectrique fixée sur un PDA. Le PDA peut être d'un type connu en soi, comprenant :
- une partie active reliée au dispositif d'amorçage pour favoriser l'amorçage d'un traceur ascendant à partir de la partie active,
- un conducteur de descente destiné à être relié à la terre, et
- une partie diélectrique par le biais de laquelle la partie active est montée sur le conducteur de descente, la partie active étant séparée du conducteur de descente par une lame d'air pour former entre eux un éclateur à air par le biais duquel le courant de foudre passe de la partie active au conducteur de descente.

La partie active et le conducteur de descente constituent les deux électrodes de l'éclateur à air.

L'enveloppe est fixée au PDA, une portion supérieure de l'enveloppe étant fixée sur la partie active. La fixation de l'enveloppe sur le PDA ne perturbe alors pas le fonctionnement de la partie active du PDA qui peut créer un espace ionisé dans l'environnement proche de la partie active.

Par ailleurs, l'enveloppe est adaptée au PDA de manière à ce que la fixation de l'enveloppe sur le PDA assure une protection de l'éclateur à air du PDA. Cette protection de l'éclateur à air du PDA est assurée contre la dégradation par l'environnement des caractéristiques diélectriques de l'éclateur à air.

Ceci est permis par le caractère diélectrique de l'enveloppe. De par son caractère diélectrique, l'enveloppe peut être disposée à proximité ou au contact des différentes électrodes de l'éclateur à air sans court-circuiter les électrodes de l'éclateur à air formé entre la partie active et le conducteur de descente, ni dégradé ses caractéristiques diélectriques. Cette faculté de disposition de l'enveloppe à proximité de la partie active et du conducteur de descente permet de diminuer l'aire de la surface de communication fluidique (l'aire de la surface d'échange) entre l'air de la lame d'air et l'air extérieur à l'enveloppe. L'enveloppe est alors adaptée pour envelopper la lame d'air de l'éclateur à air de façon à réduire sensiblement sa communication fluidique avec l'air extérieur à l'enveloppe. Par conséquent, la pénétration de gouttelettes d'eau, d'insectes ou de particules de pollution dans la lame d'air à l'intérieur de l'enveloppe est réduite, voire totalement empêchée, par la réduction des échanges entre la lame d'air et l'air extérieur. En définitive, en raison de son caractère diélectrique, l'enveloppe peut être réalisée et agencée sur le PDA de manière à obtenir une protection suffisante de l'éclateur à air contre les dégradations de l'environnement via la réduction de la communication fluidique entre la lame d'air de l'éclateur et l'air extérieur.

Comparativement au PDA divulgué dans FR-A-2 799 585, l'enveloppe proposée permet d'améliorer notablement la protection des PDAs contre les dégradations de l'environnement. En effet, dans ce dispositif de l'art antérieur, la cloche de protection ne peut pas être disposée proche du conducteur de descente ou au contact de celui-ci puisque la distance les séparant est imposée par la distance d'isolation de l'éclateur à air formé entre eux. D'ailleurs, l'enveloppe proposée selon l'invention peut bien entendue être utilisée sur un PDA conforme à FR-A-2 799 585 pour en améliorer sa fiabilité.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe de l'enveloppe fixée sur le paratonnerre et selon un mode de réalisation ;
- figure 2, un schéma du paratonnerre à dispositif d'amorçage sur lequel peut être fixée l'enveloppe de la figure 1 ;
- figure 3, une vue de dessous de la portion inférieure de l'enveloppe de la figure 1 ;
- figure 4, une vue en coupe de l'enveloppe selon un autre mode réalisation ;
- figures 5, 6 et 7, des vues successives de l'enveloppe de la figure 3, avant amorçage de l'éclateur, pendant l'évacuation de l'air dilaté par l'amorçage de l'éclateur et après l'amorçage de l'éclateur.

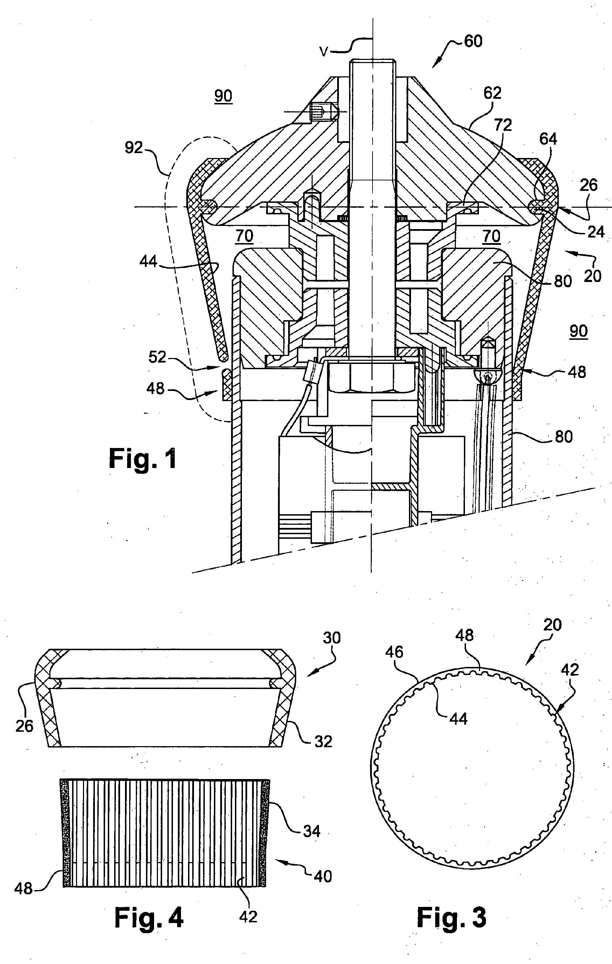

La figure 1 illustre une vue en coupe d'un premier mode de réalisation de l'enveloppe proposée. La géométrie de l'enveloppe 20 et du PDA 60 présente ici une symétrie de révolution autour de l'axe noté `V' sur la figure 1.

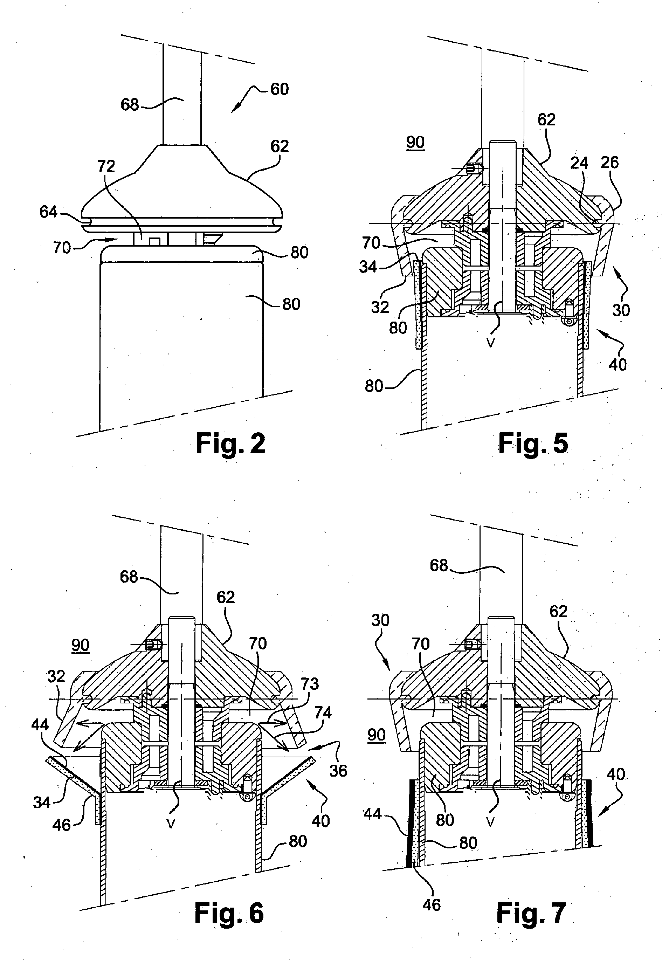

La figure 2 illustre une vue du PDA sur lequel l'enveloppe est fixée. Le conducteur de descente à la terre 80 est disposé en partie basse du PDA 60 de manière à être aisément relié à la terre. La partie active 62 est montée sur le conducteur de descente 80 par le biais de la partie diélectrique 72, autrement dit une pièce en matériau électriquement isolant ou un assemblage de pièces qui soit électriquement isolant. La partie diélectrique 72 permet ainsi la séparation de la partie active 62 et du conducteur de descente 80 par la lame d'air 70 formant l'éclateur du PDA 60. La partie diélectrique 72 du PDA et la lame d'air 70 assurent l'isolation électrique de la partie active 62 par rapport au conducteur de descente 80. La partie active 62 du PDA 60 peut comporter une pointe ascendante 68 permettant l'amélioration de l'effet de pointe du PDA.

Le PDA comporte, de manière connue et non illustrée, un dispositif d'amorçage des moyens d'application de pics de tension à la partie active 62 permettant la création un espace ionisé autour de la pointe 68.

La figure 1 montre l'enveloppe 20 fixée sur le PDA 60 de manière à laisser la partie active 62 du PDA exposée à l'environnement.

Selon le mode de réalisation illustré en figure 1, l'enveloppe 20 forme une seule et même pièce, ce qui a l'avantage de procurer une enveloppe simple et économique à fabriquer et de mise en place simple sur les PDAs. L'enveloppe 20 possède ici une forme de manchon. L'enveloppe 20 est fixée sur le pourtour extérieur du paratonnerre 60 formant un assemblage de l'enveloppe 20 avec le PDA 60. Les dimensions de l'enveloppe 20 avant assemblage peuvent être choisies de manière à réaliser la fixation sur le PDA 60 par la déformation élastique de l'enveloppé 20.

La figure 1 montre qu'une portion supérieure de l'enveloppe 20 est fixée sur la partie active 62 du PDA 60. La portion supérieure 26 de l'enveloppe 20 présente, avant sa fixation sur la partie active 62, un diamètre intérieur inférieur au diamètre extérieur la partie active 62 du PDA 60. La déformation élastique de l'enveloppe 20 assure un serrage efficace de l'enveloppe 20 sur la partie active 62. La déformation élastique de l'enveloppe 20 sur la partie active 62 permet aussi une fixation étanche de l'enveloppe 20 sur le pourtour de partie active du PDA. De manière complémentaire ou alternative, l'enveloppe 20 peut comporter une saillie 24 sur la paroi intérieure (ou face interne) de l'enveloppe 20. La saillie 24 est alors logée dans une gorge 64 prévue par exemple sur la partie active 62 du PDA 60, pour un serrage efficace du l'enveloppe 20 sur le PDA. Compte tenu de la symétrie de révolution, la gorge 64 et la saillie 24 peuvent avoir une conformation circulaire, la saillie 24 est alors annulaire.

De manière similaire, une portion inférieure 48 de l'enveloppe 20 peut être fixée sur le conducteur de descente 80, tel qu'illustré par la figure 1. Cette portion inférieure 48 de l'enveloppe 20 peut présenter, avant sa fixation sur le conducteur de descente 80, un diamètre intérieur inférieur au diamètre extérieur du conducteur de descente 80 du PDA 60, pour permettre une fixation par déformation élastique. La déformation élastique de la portion inférieure 48 permet la fixation de manière étanche de l'enveloppe 20 sur un pourtour du conducteur de descente 80.

De manière alternative au mode de réalisation de la figure 1, l'enveloppe 20 peut être fixée sur la partie active 62 par la portion supérieure 26 sans être fixée au conducteur de descente 80. L'enveloppe 20 est dans ce cas entièrement supportée par la partie active 62. La portion inférieure 48 de l'enveloppe s'étend à distance du conducteur de descente 80 tout en étant suffisamment proche du conducteur de descente 80 pour limiter la communication fluidique entre la lame d'air 70 et l'air extérieur 90 à l'enveloppe 20. De manière à réduire encore les échanges entre la lame d'air 70 et l'air extérieur 90, la portion inférieure 48 peut être disposée autour du conducteur de descente 80 avec un jeu faible, voire être disposée au contact de celui-ci.

Cependant, le niveau souhaitable de l'étanchéité de la fixation sur le conducteur de descente 80 n'empêche pas de prévoir avantageusement au moins un canal d'écoulement 52 de l'eau de condensation de la lame d'air 70, hors de l'enveloppe. La lame d'air 70, même séparée de l'air extérieur 90, reste soumise aux variations de température de l'atmosphère. Il est alors possible que l'humidité présente dans la lame d'air 70 se condense en eau liquide. Le maintien d'eau liquide à l'intérieur de l'enveloppe 20 peut gêner le bon fonctionnement de l'éclateur à air. Le canal d'évacuation 52 de l'eau condensée est disposé de préférence au niveau de la portion inférieure 48 de l'enveloppe 20. Par étanchéité de la fixation de la portion inférieure 48 sur le conducteur de descente 80, il convient donc d'entendre un niveau d'étanchéité suffisant pour empêcher ou limiter sensiblement l'intrusion à l'intérieur de l'enveloppe 20 de gouttelettes d'eau en suspension dans l'air, ce qui n'est pas incompatible avec l'aménagement dans l'enveloppe 20 - ou éventuellement dans le conducteur de descente 80 - d'au moins un canal d'écoulement 52 de l'eau de condensation hors de l'enveloppe 2020. Un tel niveau d'étanchéité est suffisant pour empêcher aussi la pénétration de particules de pollution ou de la limiter sensiblement, de même que l'intrusion d'insectes.

Il est avantageux de prévoir une pluralité de canaux d'évacuation 52 sous la forme de rainures. La figure 3 montre une vue de dessous de la portion inférieure 48 de l'enveloppe 20. Cette figure met en évidence que des rainures, 42 sont ménagées dans la face interne 44 de la portion inférieure 48 de l'enveloppe 20 Les rainures peuvent être réalisées simplement par des évidements verticaux de l'enveloppe 20. De telles rainures s'étendent le long de la face intérieure de la partie 48 de l'enveloppe 20 en contact avec le conducteur de descente 80 depuis l'intérieur de l'enveloppe 20 jusqu'à l'extérieur de l'enveloppe. De cette manière, l'évacuation de l'eau de condensation de la lame d'air 70 n'est pas réalisée par un orifice traversant de par en par l'enveloppe 20. En l'absence d'orifice traversant de par en par l'enveloppe 20, la tenue de l'enveloppe 20 aux sollicitations mécaniques est améliorée.

La figure 4 illustre un mode de réalisation de l'enveloppe 20 réalisée en deux pièces distinctes 30 et 40. Les pièces 30 et 40 ont ici chacune la forme de manchon. Pour cet autre mode de réalisation, les caractéristiques identiques précédemment décrites présentent les mêmes signes de référence. La première pièce 30 comporte la portion supérieure 26 de l'enveloppe 20 et la deuxième pièce 40 comporte la portion inférieure 48 de l'enveloppe 20. La première pièce 30 est ainsi fixée sur la partie active 62 du PDA 60 alors que la deuxième pièce 40 est prévue pour être fixée sur le conducteur de descente 80.

La figure 5 montre une vue de l'enveloppe 20 en deux pièces 30 et 40 fixées sur le PDA 60. De même que pour la figure 1, l'enveloppe 20 et le PDA 60 de la figure 5 présente une symétrie de révolution autour de l'axe vertical noté `V'.

Après l'assemblage de l'enveloppe 20 et du PDA 60 par fixation des pièces 30 et 40, les pièces 30 et 40 se rejoignent pour protéger l'éclateur à air des dégradations de l'environnement. La lame d'air 70 est ainsi entourée par l'enveloppe 20 de manière sensiblement étanche. La pièce 30 est adaptée à être fixée sur la partie active 62 du PDA 60 de manière à laisser la partie active 62 du PDA 60 exposée à l'environnement. La pièce 40 est adaptée à être fixée sur le conducteur de descente 80. La fixation des pièces 30 et 40 sur, respectivement, la partie active 62 et le conducteur de descente 80 peut être réalisée élastiquement comme mentionné pour l'enveloppe de la figure 1.

Selon les deux modes de réalisation précédents, l'enveloppe 20 s'étend alors depuis la partie active 62 jusqu'au conducteur de descente 80. De cette manière, la lame d'air 70 entre la partie active 62 et le conducteur de descente 80 et la partie diélectrique 72 sont séparées de l'air atmosphérique 90 située à l'extérieur de l'enveloppe 20..

Les figures 1 et 5 illustrent le PDA 60 équipé avec l'enveloppe 20. Cependant, le montage de l'enveloppe 20 sur le PDA 60 peut avantageusement se faire sur site, l'enveloppe 20 et le PDA 60 pouvant être livré sous la forme d'un ensemble prêt à être monté (ou kit).

La fixation de l'enveloppe 20 sur le PDA entraîne la séparation de la lame d'air 70 de l'air 90 située à l'extérieur de l'enveloppe 20. Les figures 1 et 5 montrent que la distance d'isolation entre la partie active 62 et le conducteur de descente à travers l'air 90 du côté extérieur de l'enveloppe 20 est supérieure ou égale au double de la distance d'isolation de la lame d'air 70. L'air 90 extérieur possède des caractéristiques diélectriques (c'est-à-dire des caractéristiques d'isolation électrique) qui peuvent être altérées par les précipitations et par la pollution présente dans l'atmosphère. Cependant l'enveloppe 20 étant diélectrique, la longueur de l'arc électrique 92 susceptible de se former dans l'air extérieur 90 est supérieure à la hauteur de l'enveloppe 20, tel qu'illustré par la figure 1. L'air extérieur 90 procure alors une distance d'isolation égale à la hauteur de l'enveloppe 20. Le choix de la longueur de l'enveloppe 20 une fois assemblée avec le PDA 60 permet le maintien d'une isolation électrique suffisante entre la partie active 62 et le conducteur de descente 80 pour tolérer des altérations des caractéristiques isolantes de l'air extérieur 90. Dans ce même but, le matériau de l'enveloppe 20 est choisi avantageusement pour présenter un caractère hydrophobe permettant d'empêcher le ruissellement ou le dépôt de gouttelettes d'eau sur la surface extérieure de l'enveloppe 20. Par ailleurs l'enveloppe 20 peut présenter un état de surface suffisamment lisse pour limiter le dépôt de particules de pollution sur la surface extérieure de l'enveloppe 20.

En définitive, l'ensemble des éléments s'étendant entre la partie active 62 et le conducteur de descente 80 sont soit préservés des altérations atmosphériques (c.'est le cas de l'air de l'éclateur à air et de la partie diélectrique 72), soit présentent une isolation électrique suffisante malgré altérations atmosphériques (c'est le cas de l'enveloppe 20).

Lors de l'occurrence d'un coup de coup de foudre, le claquage ou l'amorçage de l'éclateur du PDA 60 provoque un échauffement très rapide de la lame d'air 70. Cet échauffement de la lame d'air 70 séparée de l'air extérieur 90 par l'enveloppe 20 entraîne la sollicitation mécanique de l'enveloppe 20 par la lame d'air 70 dilatée.

L'enveloppe 20 est alors avantageusement réalisée en matériau élastique pour assurer la déformation élastique de l'enveloppe 20 soumise aux sollicitations mécaniques par la lame d'air 70 dilaté. La déformation uniquement élastique de l'enveloppe 20 permet un maintien de la fonction de l'enveloppe 20 après l'occurrence d'un premier coup de foudre.

De ce point de vue, le matériau élastique constitutif de l'enveloppe 20 présente un allongement à la limite d'élasticité qui est préférentiellement supérieur ou égale à 300 %. L'éthylène-propylène-diène monomère (abrégé en EPDM), ou encore le silicone sont des matériaux élastiques particulièrement adaptés pour réaliser l'enveloppe 20. Le silicone utilisé présente de préférence les caractéristiques suivantes : une résistance à la rupture de 7,3 MPa, un allongement à la rupture de 500 % au sens de la norme NFT 46-002 et une dureté de 60 shore A au sens de la norme NFT 46-052. L'EPDM utilisé présente de préférence les caractéristiques suivantes : une résistance à la rupture de 7,5 MPa et un allongement à la rupture de 680 % au sens de la norme NFT 46-002. L'EPDM et le silicone présentent, en plus de l'élasticité, des caractéristiques avantageuses pour une utilisation comme enveloppe protectrice de PDA. Ils possèdent ainsi un état de surface lisse, une bonne isolation électrique et une bonne tenue au vieillissement. Dans le mode de réalisation de l'enveloppe 20 en deux pièces distinctes 30 et 40, les pièces 30 et 40 peuvent être réalisées en un matériau différent. La pièce 30 est de préférence réalisée en EPDM alors que la pièce 40 est de préférence réalisée en silicone de dureté 60 shore A.

Tel que précédemment décrit, l'élasticité de l'enveloppe 20 permet de fixer l'enveloppe 20 au PDA de façon élastique tout en assurant une fixation étanche.

En outre, la conception de l'enveloppe 20 peut être adaptée de manière à présenter une déformation élastique de l'enveloppe 20 permettant l'évacuation dans l'atmosphère d'une partie de l'air dilatée de lame d'air 70.

L'adaptation de la conception peut être d'une part permise par la réalisation de l'enveloppe dans un matériau élastique et d'autre part, par le choix d'une géométrie adaptée de l'enveloppe 20.

La géométrie et/ou l'élasticité de l'enveloppe 20 peuvent être choisies pour assurer que l'air dilaté soit évacué par passage entre l'enveloppe 20 et le conducteur de descente 80. A cette fin, la fixation de l'enveloppe 20 sur la partie active 26 peut présenter, sous l'effet de la dilation de l'air, une déformation élastique plus faible que la déformation élastique de la fixation de l'enveloppe 20 sur le conducteur de descente 80. L'air dilaté s'évacue alors par le décollement de la portion inférieure 48 par rapport au conducteur de descente 80avec lequel la portion inférieure 48 de l'enveloppe 20 est normalement en contact. L'air dilaté est ainsi évacué dans l'atmosphère le long du conducteur de descente 80 vers le bas, bien que l'air, ayant été échauffé par l'amorçage de l'éclateur, tende à s'élever au niveau de la partie haute du PDA 60 constitué par la partie active 62. D'une manière générale, il est préférable que l'enveloppe 20 présente un serrage suffisant sur la partie active 62 du PDA 60 pour assurer le maintien de l'assemblage de l'enveloppe 20 avec le PDA 60 malgré les sollicitations mécaniques. De cette manière, la fonction de préservation contre les altérations atmosphériques de l'enveloppe 20 est assurée pendant une longue période de temps sans nécessiter l'intervention sur l'enveloppe 20 pour une nouvelle fixation de l'enveloppe sur le PDA après chaque coup de foudre.

Dans le mode de réalisation de l'enveloppe 20 selon la figure 1, l'enveloppe 20 est réalisée en matière élastique pour permettre d'évacuer l'air dilaté en plus de tenir aux sollicitations mécaniques au niveau de la fixation à la partie active 62.

L'enveloppe 20, selon le mode de réalisation illustré en figure 5, possède une géométrie adaptée pour permettre l'évacuation de l'air dilaté en cas d'amorçage de l'éclateur à air 62.

Les figures 5, 6 et 7 présentent des vues successives de l'enveloppe 20 en deux pièces 30 et 40 lors de l'occurrence d'un amorçage de l'éclateur. Avant l'amorçage de l'éclateur à air, la pièce 30 présente une portion 32 chevauchant, au moins en partie, une portion 34 de la pièce 40, conformément à la figure 5. Autrement dit, la portion 32 entoure la portion 34, ce qui évite l'accumulation d'eau au niveau de la jointure de ces deux pièces et le risque de ruissellement d'eau à l'intérieur de l'enveloppe 20. Ainsi avant l'amorçage de l'éclateur à air, la lame d'air 70 est bien séparée de l'air extérieur 90 par l'enveloppe 20. En référence à la figure 6, lors de l'amorçage de l'éclateur à air, la lame d'air 70 se dilate et impose une déformation de la pièce 30 selon la flèche 73 ainsi qu'une déformation de la pièce 40 selon la flèche 74. La déformation des deux pièces 30 et 40 entraînent alors la disjonction des portions 34 et 32 qui étaient initialement jointes. Cette disjonction permet la formation d'une ouverture 36 d'évacuation de l'air dilaté par l'amorçage de l'éclateur à air. L'on comprendra que la position des pièces 30 et 40 sur la figure 6 est une position intermédiaire qui ne correspond pas à une position stable.

Après l'amorçage de l'éclateur à air, les pièces 30 et 40 peuvent par déformation élastique, revenir à la configuration illustrée en figure 5. Les portions 32 et 34 sont alors à nouveau jointes, ce qui permet de séparer à nouveau la lame d'air 70 de l'air extérieur 90. La fonction de préservation du PDA contre les dégradations de l'environnement est alors assurée malgré l'occurrence d'un premier amorçage de l'éclateur à air du PDA 20. Toutefois la jonction des pièces 30 et 40 peut présenter une position légèrement différente de la position initiale illustrée en figure 5. Ainsi le chevauchement initial de la pièce 40 par la pièce 30 peut être devenu, après un premier amorçage, un chevauchement de la pièce 30 par la pièce 40, correspondante à la situation où la pièce 40 est passée par-dessus la pièce 30, autrement dit c'est la portion 34 qui entoure la portion 32.

Selon un mode alternatif de réalisation, les pièces 30 et 40, après amorçage, ne reviennent pas à la configuration initiale de la figure 5, les pièces 30 et 40 restant disjointes. La figure 7 illustre cette nouvelle configuration dans laquelle les pièces 30 et 40 peuvent se trouver après amorçage de l'éclateur. La pièce 30 est revenue dans la position initiale de la figure 5 alors que la pièce 40 est dans une nouvelle position. La pièce 40 présente alors deux positions de fixation au conducteur de descente 80. La première position de fixation de la pièce 40 correspond à la position illustrée à la figure 5 dans laquelle la pièce 40 et la pièce 30 sont jointes. La deuxième position de fixation de la pièce 40 correspond à la position illustrée à la figure 7. Après un premier amorçage, la pièce 40 garde la position illustrée en figure 7.

Pour passer de la position illustrée en figure 5 à la position illustrée en figure 7, la pièce 40 s'est retournée le long du conducteur de descente 80 sous l'effet de la dilation de l'air. En effet dans la première position et en référence à la figure 6, la pièce 40 présente une face intérieure 44 tournée vers le conducteur de descente 80 et une face extérieure 46 tournée vers l'air extérieur 90. Dans la deuxième position et en référence à la figure 7, la face extérieure 46 est tournée vers le conducteur de descente 80 alors que la face intérieure 48 est tournée vers l'air extérieur 90.

Selon la puissance du coup de foudre, la dilation de l'air entraîne le retournement complet de la pièce 40, tel qu'illustré par la figure 7, ou le retournement partiel de la pièce 40, non illustré. Le retournement partiel de la pièce 40 correspond au rabattement de la portion 34 sur la portion inférieure 48, la portion inférieure restant fixée sur le conducteur de descente 80. La pièce 40 est ainsi pliée en deux le long du conducteur de descente 80.

La position de retournement de la pièce 40 caractérise l'occurrence d'un coup de foudre sur le PDA. La simple visualisation de la position de la pièce 40 permet alors de déterminer l'occurrence d'un coup de foudre sur le PDA 60. La face intérieure 48 peut présenter un motif ou une couleur visible de manière à améliorer la visualisation à distance de l'occurrence d'un coup de foudre sur le PDA 60. De façon complémentaire ou alternative, un indicateur, par exemple sous la forme d'un ruban de couleur vive non représenté, peut être disposé à l'intérieur de l'enveloppe 20 de manière à être visible de l'extérieur lorsque la pièce 40 est retournée sur le conducteur de descente 80.

Après l'occurrence d'un coup de foudre, la portion 34 de la pièce 30 est de préférence adaptée pour être suffisamment proche du conducteur de descente 80 afin que, après un premier amorçage de l'éclateur à air, la lame d'air 70 soit encore protégée contre les dégradations dues à l'environnement. En référence à la figure 7, la pièce 30 forme ainsi une cloche à l'intérieur de laquelle est disposée la partie diélectrique 72 et l'éclateur à air 70. Le bord inférieur de la cloche est proche du conducteur de descente 80, avantageusement à une distance inférieure à la distance d'isolation diélectrique de l'éclateur à air, ce qui permet d'assurer une protection adéquate de l'éclateur à air et de sa partie diélectrique 72.

## Revendications

1. Ensemble comprenant :
- un paratonnerre à dispositif d'amorçage (60), comprenant :
∘ une partie active (62) reliée au dispositif d'amorçage pour favoriser l'amorçage d'un traceur ascendant à partir de la partie active (62),
∘ un conducteur de descente (80) destiné à être relié à la terre, et
∘ une partie diélectrique (72) par le biais de laquelle la partie active (62) est montée sur le conducteur de descente (80), la partie active (62) étant séparée du conducteur de descente (80) par une lame d'air (70) pour former entre eux un éclateur à air par le biais duquel le courant de foudre passe de la partie active (62) au conducteur de descente (80),
- une enveloppe diélectrique (20) fixée sur le paratonnerre (60) pour protéger l'éclateur à air contre la dégradation de ses caractéristiques diélectriques par l'environnement, une portion supérieure (26) de l'enveloppe (20) étant fixée sur la partie active (62).

2. Ensemble selon la revendication 1, dans lequel l'enveloppe (20) est fixée de manière étanche sur le pourtour inférieur de la partie active du paratonnerre.

3. Ensemble selon la revendication 1 ou 2, dans lequel l'enveloppe (20) est fixée de manière étanche sur un pourtour du conducteur de descente.

4. Ensemble selon l'une quelconque des revendications 1 à 3, dans lequel l'enveloppe (20) présente un caractère élastique pour assurer son maintien sur le paratonnerre par serrage élastique de l'enveloppe sur la partie active (62) du paratonnerre (60) et éventuellement sur le conducteur de descente du paratonnerre.

5. Ensemble selon l'une quelconque des revendications 1 à 4, dans lequel l'enveloppe (20) comprend une saillie annulaire (24) sur la face interne (44) de l'enveloppe (20) disposée sur la partie active du paratonnerre, ladite saillie annulaire étant logée dans une gorge correspondante de la partie active du paratonnerre pour fixer l'enveloppe (20) sur le paratonnerre.

6. Ensemble selon l'une quelconque des revendications 1 à 5, dans lequel l'enveloppe (20) est réalisée en EPDM et/ou en silicone.

7. Ensemble selon l'une quelconque des revendications 1 à 6, dans lequel l'enveloppe (20) comprend au moins une rainure ménagée dans la face interne (44) de la partie de l'enveloppe (20) en contact contre le conducteur de descente du paratonnerre pour permettre l'écoulement hors de l'enveloppe de l'eau de condensation se formant dans l'éclateur à air.

8. Ensemble selon l'une quelconque des revendications 1 à 7, dans lequel l'enveloppe (20) est dimensionnée pour que la distance d'isolation à travers l'air entre la partie active et le conducteur de descente du paratonnerre du côté extérieur de l'enveloppe soit supérieure ou égale au double de la distance d'isolation de l'éclateur à air.

9. Ensemble selon l'une quelconque des revendications 1 à 8, dans lequel l'enveloppe (20) est formée en une seule et même pièce, l'enveloppe étant conçue pour permettre l'évacuation dans l'environnement d'air dilaté provenant de l'éclateur à air sur amorçage de celui-ci par le courant de foudre.

10. Ensemble selon la revendication 9, dans lequel l'enveloppe (20) assure l'évacuation de l'air dilaté par passage entre l'enveloppe et le conducteur de descente.

11. Ensemble selon la revendication 10, dans lequel l'enveloppe (20) est présente un caractère élastique assurant la déformation élastique de l'enveloppe (20) sous l'effet de la dilation de l'air de l'éclateur sur amorçage de celui-ci par le courant de foudre pour autoriser ou favoriser le passage de l'air dilaté entre l'enveloppe et le conducteur de descente.

12. Ensemble selon l'une quelconque des revendications 1 à 8, dans lequel l'enveloppe (20) est réalisée en deux pièces distinctes (30, 40) fixées la première sur la partie active du paratonnerre et la deuxième sur le conducteur de descente du paratonnerre tout en se rejoignant pour former ensemble l'enveloppe, les deux pièces (30, 40) étant disjointes lorsque le courant de foudre amorce la dilatation de l'air de l'éclateur.

13. Ensemble selon la revendication 12, dans lequel la deuxième pièce (40) est adaptée pour changer de position sous l'effet de la dilation de l'air de l'éclateur sur amorçage de celui-ci par un courant de foudre afin de visualiser l'occurrence du coup de foudre sur le paratonnerre.

14. Ensemble selon la revendication 12 ou 13, dans lequel la deuxième pièce (40) est adaptée pour se retourner sur le conducteur de descente sous l'effet de la dilation de l'air de l'éclateur sur amorçage de celui-ci par un courant de foudre afin de visualiser l'occurrence du coup de foudre sur le paratonnerre.

15. Ensemble selon l'une quelconque des revendications 12 à 14, dans lequel la première pièce (30) forme une cloche à l'intérieur de laquelle est disposée la partie diélectrique et l'éclateur à air lorsque la première pièce (30) est fixée sur la partie active du paratonnerre.

## Patentansprüche

1. Baugruppe, umfassend:
- einen Blitzableiter mit Zündvorrichtung (60), umfassend:
∘ ein aktives Bauteil (62), das mit der Zündvorrichtung verbunden ist, um die Zündung eines Aufwärtsleaders ausgehend von dem aktiven Bauteil (62) zu fördern,
∘ einen Ableiter (80), der dazu bestimmt ist, mit der Erde verbunden zu werden, und
∘ ein dielektrisches Bauteil (72) über das das aktive Bauteil (62) auf dem Ableiter (80) montiert ist, wobei das aktive Bauteil (62) von dem Ableiter (80) durch einen Luftspalt (70) getrennt ist, um zwischen sich eine Luft-Funkenstrecke zu bilden, über die der Blitzstrom vom aktiven Bauteil (62) zum Ableiter (80) übergeht,
- eine dielektrische Hülle (20), die auf dem Blitzableiter (60) befestigt ist, um die Luft-Funkenstrecke gegen den Abbau ihrer dielektrischen Eigenschaften durch die Umgebung zu schützen, wobei ein oberer Abschnitt (26) der Hülle (20) auf dem aktiven Bauteil (62) befestigt ist.

2. Baugruppe nach Anspruch 1, wobei die Hülle (20) dicht auf dem unteren Umfang des aktiven Bauteils des Blitzableiters befestigt ist.

3. Baugruppe nach Anspruch 1 oder 2, wobei die Hülle (20) dicht auf einem Umfang des Ableiters befestigt ist.

4. Baugruppe nach einem der Ansprüche 1 bis 3, wobei die Hülle (20) eine elastische Eigenschaft aufweist, um ihr Verbleiben auf dem Blitzableiter durch elastische Spannkraft der Hülle auf dem aktiven Bauteil (62) des Blitzableiters (60) und gegebenenfalls auf dem Ableiter des Blitzableiters zu gewährleisten.

5. Baugruppe nach einem der Ansprüche 1 bis 4, wobei die Hülle (20) einen ringförmigen Vorsprung (24) auf der Innenseite (44) der Hülle (20) umfasst, der auf dem aktiven Bauteil des Blitzableiters angeordnet ist, wobei sich der ringförmige Vorsprung in einer entsprechenden Ausnehmung des aktiven Bauteils des Blitzableiters befindet, um die Hülle (20) auf dem Blitzableiter zu befestigen.

6. Baugruppe nach einem der Ansprüche 1 bis 5, wobei die Hülle (20) aus EPDM und/oder aus Silikon hergestellt ist.

7. Baugruppe nach einem der Ansprüche 1 bis 6, wobei die Hülle (20) mindestens eine Einkerbung umfasst, die in der Innenseite (44) des Teils der Hülle (20) angeordnet ist, der gegen den Ableiter des Blitzableiters zur Anlage kommt, um den Abfluss des Kondensationswassers, das sich in der Luft-Funkenstrecke bildet, aus der Hülle zu ermöglichen.

8. Baugruppe nach einem der Ansprüche 1 bis 7, wobei die Hülle (20) derart dimensioniert ist, dass der Isolationsabstand durch die Luft zwischen dem aktiven Teil und dem Ableiter des Blitzableiters auf der Außenseite der Hülle größer oder gleich dem zweifachen Isolationsabstand der Luft-Funkenstrecke ist.

9. Baugruppe nach einem der Ansprüche 1 bis 8, wobei die Hülle (20) aus ein und demselben Teil gebildet ist, wobei die Hülle ausgelegt ist, um die Ausleitung der ausgedehnten Luft, die aus der Luft-Funkenstrecke beim Zünden derselben durch den Blitzstrom stammt, in die Umgebung zu ermöglichen.

10. Baugruppe nach Anspruch 9, wobei die Hülle (20) die Ausleitung der ausgedehnten Luft mittels Durchgang zwischen der Hülle und dem Ableiter gewährleistet.

11. Baugruppe nach Anspruch 10, wobei die Hülle (20) ein elastisches Merkmal aufweist, das die elastische Verformung der Hülle (20) unter Einwirkung der Ausdehnung der Luft der Funkenstrecke beim Zünden derselben durch den Blitzstrom gewährleistet, um den Durchgang der ausgedehnten Luft zwischen der Hülle und dem Ableiter zu gestatten oder zu fördern.

12. Baugruppe nach einem der Ansprüche 1 bis 8, wobei die Hülle (20) aus zwei verschiedenen Teilen (30, 40) hergestellt ist, wobei das erste auf dem aktiven Bauteil des Blitzableiters und das zweite auf dem Ableiter des Blitzableiters befestigt ist und sie sich dabei verbinden, um zusammen die Hülle zu bilden, wobei sich die beiden Teile (30, 40) voneinander lösen, wenn der Blitzstrom die Ausdehnung der Luft der Funkenstrecke auslöst.

13. Baugruppe nach Anspruch 12, wobei das zweite Teil (40) angepasst ist, um seine Position unter Einwirkung der Ausdehnung der Luft der Funkenstrecke beim Zünden derselben durch einen Blitzstrom zu verändern, um das Einschlagen des Blitzes in den Blitzableiter sichtbar zu machen.

14. Baugruppe nach Anspruch 12 oder 13, wobei das zweite Teil (40) angepasst ist, um sich auf den Ableiter unter Einwirkung der Ausdehnung der Luft der Funkenstrecke beim Zünden derselben durch einen Blitzstrom umzudrehen, um das Einschlagen des Blitzes in den Blitzableiter sichtbar zu machen.

15. Baugruppe nach einem der Ansprüche 12 bis 14, wobei das erste Bauteil (30) eine Glocke bildet, in deren Inneren das dielektrische Teil und die Luft-Funkenstrecke angeordnet sind, wenn das erste Teil (30) auf dem aktiven Bauteil des Blitzableiters befestigt wird.

## Claims

1. An assembly comprising:
- a lightning arrester with an early streamer emission device (60) comprising
• an active portion (62) connected to the early streamer emission device to promote the triggering of an upward leader from the active portion (62),
• a down conductor (80) to be grounded, and
• a dielectric portion (72) through which the active portion (62) is mounted on the down conductor (80), the active portion (62) being separated from the down conductor (80) by an air space (70) to form between them an air spark gap through which the lightning current passes from the active portion (62) to the down conductor (80),
- a dielectric protective cover (20) fastened to the lightning arrester (60) to protect the air spark gap against degradation of its dielectric properties by the environment, an upper portion (26) of the protective cover (20) being secured onto the active portion (62).

2. Assembly according to claim 1, in which the protective cover (20) is fastened sealingly around the bottom periphery of the active portion of the lightning arrester.

3. Assembly according to claim 1 or 2, in which the protective cover (20) is fastened and sealed to a periphery of the down conductor.

4. Assembly according to any one of claims 1 to 3, in which the protective cover (20) has an elastic property to hold it in place on the lightning arrester by clamping the elastic protective cover on the active portion (62) of the lightning arrester (60) and optionally on the down-conductor of the lightning arrester.

5. Assembly according to any one of claims 1 to 4, , in which the protective cover (20) has an annular projection (24) on the inner face (44) of the protective cover (20) intended to be arranged on the active portion of the lightning arrester, said annular projection being provided for being housed in a corresponding groove of the active portion of the lightning arrester for fastening the protective cover (20) on the lightning arrester.

6. Assembly according to any one of claims 1 to 5, wherein the protective cover (20) is made of EPDM and/or silicone.

7. Assembly according to any one of claims 1 to 6, in which the protective cover (20) has at least one depression in the inner face (44) of the portion of the protective cover (20) provided to be engaged with the down-conductor of the lightning arrester to allow condensation forming in the air spark gap to drain out of the protective cover.

8. Assembly according to any one of claims 1 to 7, in which the protective cover (20) has dimensions such that the isolation distance through the air between the active portion and the down conductor of the lightning arrester on the outside of the protective cover is greater than or equal to twice the isolation distance of the air spark gap.

9. Assembly according to any one of claims 1 to 8, in which the protective cover (20) is formed as a same part, the protective cover being designed to allow expanded air from the spark gap upon triggering thereof due to the lightning current to be discharged to the environment.

10. Assembly according to claim 9, in which the protective cover (20) is provided for discharge of the expanded air by passage thereof between the protective cover and the down conductor.

11. Assembly according to claim 10, in which the protective cover (20) has an elastic property to ensure elastic deformation of the protective cover (20) as a result of the expansion of air in the air spark gap upon triggering thereof by the lightning current to allow or promote passage of the expanded air between the protective cover and the down conductor.

12. Assembly according to any one of claims 1-8, in which the protective cover (20) has two separate parts (30, 40) provided for fastening the first on the active portion of the lightning arrester and the second on the down conductor of the lightning arrester while joining them to together form the protective cover, the two parts (30, 40) being provided to be separated by the expansion of air in the air spark gap upon triggering thereof by the lightning current.

13. Assembly according to claim 12, wherein the second part (40) is adapted to change position under the effect of the expansion of the air in the air spark gap upon triggering by the lightning current, for displaying the occurrence of a lightning strike on the lightning arrester.

14. Assembly according to claim 12 or 13, wherein the second part (40) is adapted to turn over the down conductor under the effect of the expansion of air in the air spark gap upon triggering by the lightning current, for displaying the occurrence of a lightning strike on the lightning arrester.

15. Assembly according to any one of claims 12 to 14, wherein the first part (30) is provided to form a bell-shape inside of which the dielectric portion and the air spark gap are arranged when the first part (30) is fastened to the active portion of the lightning arrester.
